# EUROPÄISCHE PATENTSCHRIFT

(11) **EP 0 879 723 B1**
(45) Veröffentlichungstag und Bekanntmachung des Hinweises auf die Patenterteilung: **01.03.2006**
(21) Anmeldenummer: 98106954.5
(22) Anmeldetag: 16.04.1998
(51) Int. Cl.: B60J 7/185

(54) **Verschluss für ein Verdeck eines Fahrzeuges, insbesondere eines Personenkraftwagens**
Top closure for vehicle especially for passenger vehicle
Fermeture pour capote de véhicule en particulier pour voiture de passagers

(30) Priorität: 21.05.1997 DE 19721229
(43) Veröffentlichungstag der Anmeldung: 25.11.1998
(73) Patentinhaber: Dr.Ing.h.c. F. Porsche Aktiengesellschaft, 70435 Stuttgart (DE)
(72) Erfinder: Droste, Hans, 71229 Leonberg (DE); Bauer, Dieter, 71229 Leonberg (DE); Möbius, Wolfgang, 71701 Schwieberdingen (DE); Armbruster, Reiner, 72275 Alpirsbach (DE); Pfertner, Kurt, 71299 Wimsheim (DE)

(56) Entgegenhaltungen:
- EP-A- 0 488 494
- DE-C- 19 602 185
- FR-A- 2 562 480
- US-A- 4 830 426

## Beschreibung

Die Erfindung betrifft einen Verschluß für ein Verdeck eines Fahrzeuges, insbesondere eines Personenkraftwagens, gemäß dem Oberbegriff des Patentanspruchs 1. Ein derartiger Verschluß ist aus EP-A-0 488 494 bekannt.

Weiterhin geht aus DE-C- 196 02 185 ein etwa mittig in Fahrzeugquerrichtung angeordneter, eine gute Funktion aufweisender Verschluß für ein Verdeck eines Personenkraftwagens hervor, wobei der langgestreckte, sich in Fahrzeuglängsrichtung erstreckende Verschlußhaken manuell betätigbar ist

Durch Betätigen einer mittigen Drucktaste wird der schwenkbar gelagerte Bügelgriff des Verschlusses in eine abgesenkte Greifstellung bewegt. Durch nachfolgendes Verschwenken des Bügelgriffs wird der Verschlußhaken in die Offenstellung bewegt, in der er außer Eingriff mit der windschutzscheibenrahmenseitigen Kulisse gelangt.

Aufgabe der Erfindung ist es, einen Verschluß der eingangs genannten Gattung so weiterzubilden, daß er eine kompakte Baueinheit darstellt, die insbesondere in Fahrzeugquerrichtung wenig Bauraum beansprucht.

Erfindungsgemäß wird diese Aufgabe durch die kennzeichnenden Merkmale des Anspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, daß durch die etwa parallele Ausrichtung des Getriebemotors zu dem in Fahrzeuglängsrichtung verlaufenden Verschlußhaken ein kompakter, insbesondere in Fahrzeugquerrichtung wenig Bauraum beanspruchender motorischer Verschluß für ein Verdeck geschaffen wird. Sämtliche Bauteile des motorischen Verschlusses sind am Gehäuse befestigbar und bilden eine vorgefertigte Baueinheit, die in einfacher Weise am vorderen formsteifen Verdeckabschnitt befestigbar ist. Durch ein zwischengeschaltetes, zweistufiges Getriebe lassen sich mit einem relativ kleinen Getriebemotor über das querverlaufende Übertragungselement hohe Kräfte auf den Verschlußhaken übertragen. Eine zwischengeschaltete manuelle Notbetätigung für den Verschlußhaken weist einen einfachen Aufbau auf. Eine federbelastete Sperrklinke legt sich in Verriegelungsstellung des Verschlußhakens von oben gegen den Antriebshebel und blockiert diesen, wodurch eine zusätzliche Sicherung des Verschlußhakens bei Erschütterungen, Verwindungen oder dergleichen gegeben ist.

Ein Ausführungsbeispiel der Erfindung ist in den Zeichnungen dargestellt und wird im folgenden näher erläutert:

Es zeigt
- Fig. 1: eine perspektivische Teilansicht von schräg hinten auf ein Fahrzeug mit einem Verdeck in Schließstellung,
- Fig. 2: einen Schnitt nach der Linie II-II der Fig. 1 in größerem Maßstab, die eine seitliche Zentriereinrichtung zeigt,

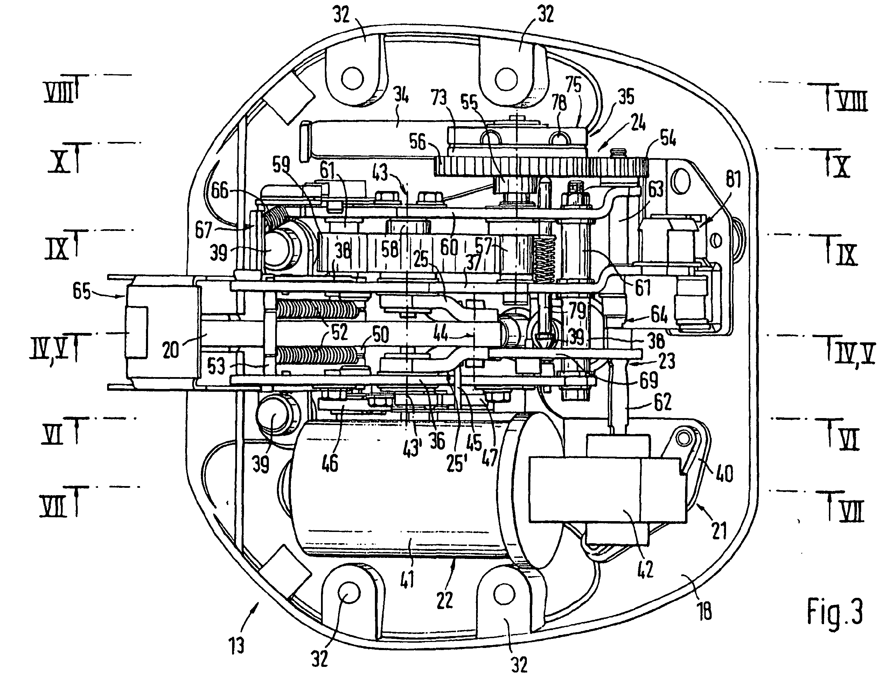

- Fig. 3: eine Draufsicht auf den mittigen, motorisch angesteuerten Verschluß,
- Fig. 4: einen Schnitt nach der Linie IV-IV der Fig. 3, wobei der Verschlußhaken seine Offenstellung einnimmt,
- Fig. 5: einen Schnitt nach der Linie V-V der Fig. 3, wobei der Verschlußhaken seine Schließstellung einnimmt,
- Fig. 6: einen Schnitt nach der Linie VI-VI der Fig. 3,
- Fig. 7: einen Schnitt nach der Linie VII-VII der Fig. 3,
- Fig. 8: einen Schnitt nach der Linie VIII-VIII der Fig. 3,
- Fig. 9: einen Schnitt nach der Linie IX-IX der Fig. 3,

- Fig. 10: einen Schnitt nach der Linie X-X der Fig. 3,
- Fig. 11: einen Schnitt nach der Linie XI-XI der Fig. 10 und
- Fig. 12: einen Schaltplan für die Betätigung einer Betätigungseinrichtung des Verschlusses.

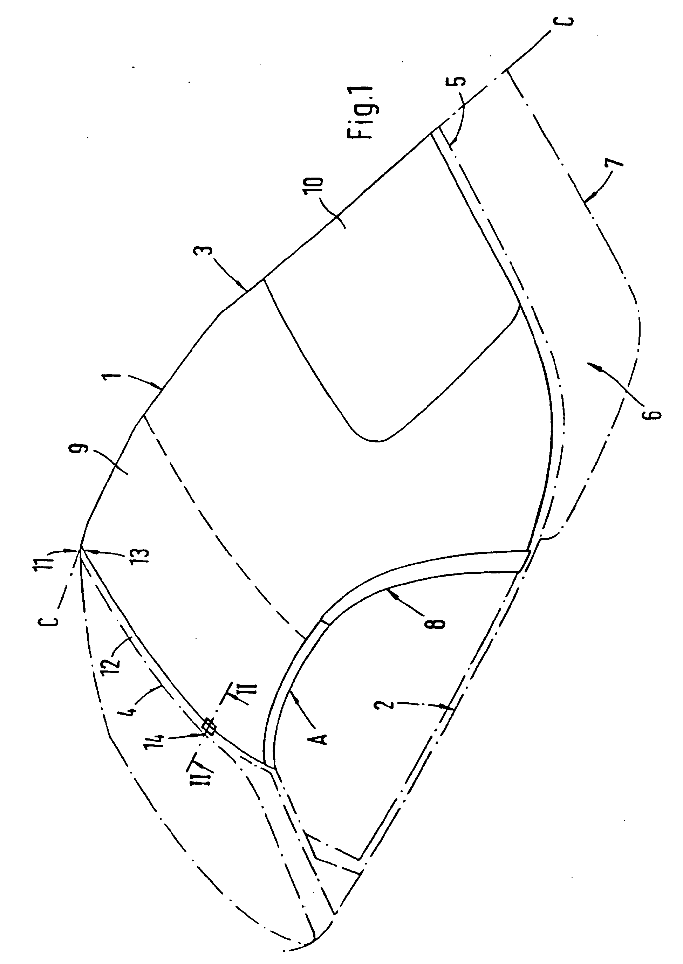

Fig. 1 zeigt einen Teilbereich eines Personenkraftwagens 1, der oberhalb einer Gürtellinie 2 ein Verdeck 3 aufweist. Das Verdeck 3 erstreckt sich im Ausführungsbeispiel in seiner Schließstellung A zwischen einem durch einen Windschutzscheibenrahmen gebildeten aufbauseitigen Rahmen 4 und einem Heckbereich 5. Im Heckbereich 5 ist ein Verdeckkasten 6 vorgesehen, der zumindest bereichsweise durch einen Verdeckkastendeckel 7 nach oben hin abgedeckt ist. Das von einer Schließstellung A in eine nicht näher dargestellte heckseitige Ablagestellung B und umgekehrt verlagerbare Verdeck 3 wird im Ausführungsbeispiel durch ein Faltverdeck gebildet, das sich aus einem am Aufbau schwenkbar angelenkten Verdeckgestell 8 und einem am Verdeckgestell 8 in Lage gehaltenen elastischen Verdeckbezug 9 zusammensetzt. Im hinteren Bereich des Verdeckbezugs 9 ist eine Sichtscheibe 10 vorgesehen, die durch eine flexible oder starre Heckscheibe gebildet wird.

Das Verdeck 3 ist mittels einer lösbaren Verriegelungsvorrichtung 11 an einem oberen querverlaufenden Bereich 12 des aufbauseitigen Rahmens 4 in seiner Schließstellung A in Lage gehalten.

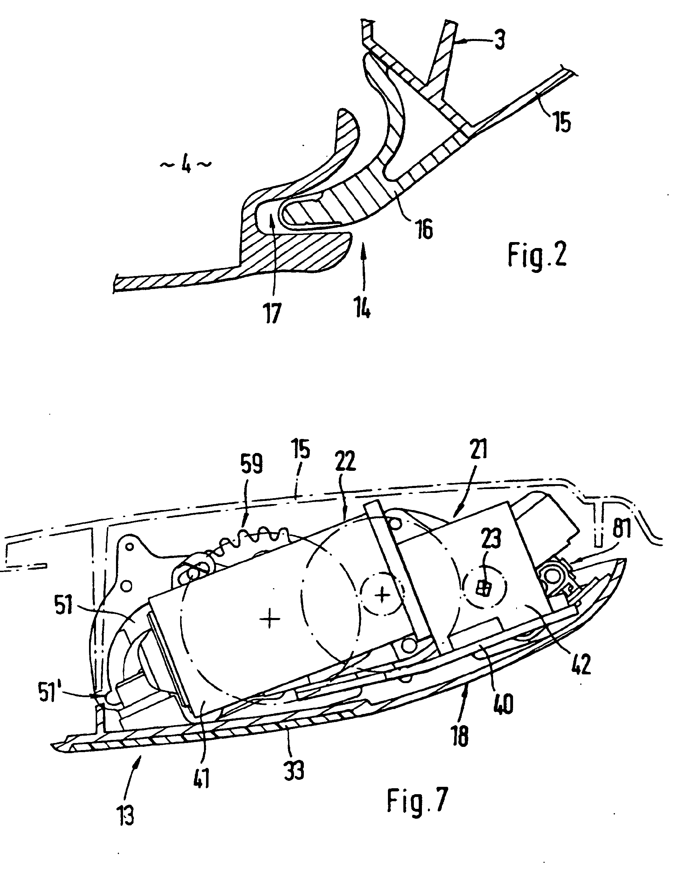

Die Verriegelungsvorrichtung 11 umfaßt im Ausführungsbeispiel lediglich einen im Bereich einer Fahrzeuglängsmittelebene C-C angeordneten, zentralen Verschluß 13 und zwei seitlich außenliegende Zentriereinrichtungen 14. Es können aber auch zwei mit Abstand zueinander angeordnete Verschlüsse 13 vorgesehen sein. Mittels der beiden Zentriereinrichtungen 14 wird das Verdeck 3 in Fahrzeugquer- und in Fahrzeughöhenrichtung festgelegt (Fig. 2). Jede Zentriereinrichtung 14 umfaßt ein an einem vorderen formsteifen Verdeckrahmen 15 angeordnetes, vorstehendes Zentrierelement 16, das in Schließstellung A des Verdecks 3 mit einer am Rahmen 4 angebrachten Aufnahme 17 zusammenwirkt. Das Zentrierelement 16 ist am Verdeckrahmen 15 befestigt. Der formsteife vordere Verdeckrahmen 15 des Verdecks 3 wird durch ein großflächiges Gußteil aus einer Leichtmetallegierung gebildet (Alu- oder Magnesiumlegierung).

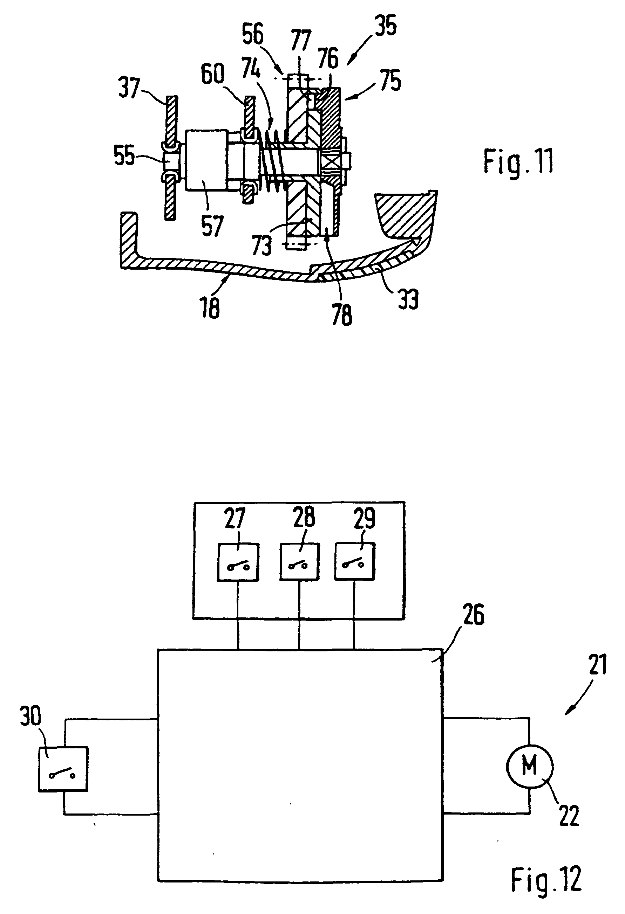

Der als Kniehebelverschluß ausgebildete Verschluß 13 umfaßt im wesentlichen ein an der Unterseite des formsteifen vorderen Verdeckrahmens 15 befestigtes Gehäuse 18, einen in seiner Verriegelungsstellung D mit einer am Rahmen 4 angeordneten Kulisse 19 in Wirkverbindung stehenden Verschlußhaken 20 sowie eine motorische Betätigungseinrichtung 21 zur Verstellbewegung des Verschlußhakens 20. Mittels des Verschlusses 13 wird das Verdeck 3 in Längsrichtung nach vorne gegen den feststehenden Rahmen 4 gespannt. Die motorische Betätigungseinrichtung 21 umfaßt einen etwa parallel und mit seitlichem Abstand zur Längserstreckung des langgestreckten Verschlußhakens 20 verlaufenden Getriebemotor 22, der über ein querverlaufendes Übertragungselement 23 und ein nachgeschaltetes Getriebe 24 mit zumindest einem, den Verschlußhaken 20 bewegenden Antriebshebel 25, 25' in Wirkverbindung steht. Die motorische Betätigungseinrichtung 21 ist über ein Steuergerät 26 in Betrieb setzbar, wobei das Steuergerät 26 verschiedene Signale von Überwachungskontakten 27, 28, 29 und einen von einem Fahrzeuginsassen bedienbaren Betätigungsschalter 30 erhält (Fig. 12). Durch die Selbsthemmung im Getriebe sowie einer Verschlußhakenlage von 15° hinter o.T. wird der Verschluß 13 am Öffnen gehindert.

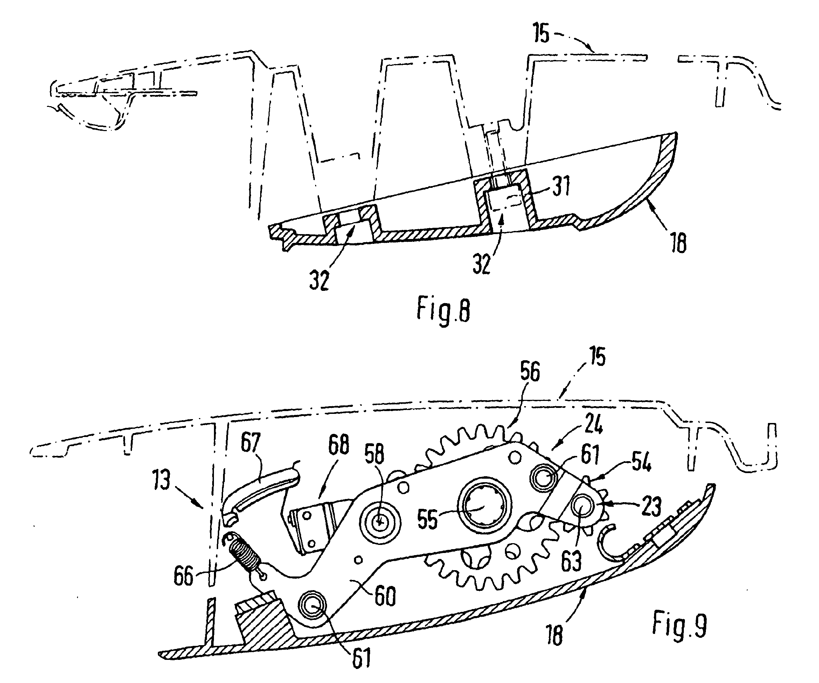

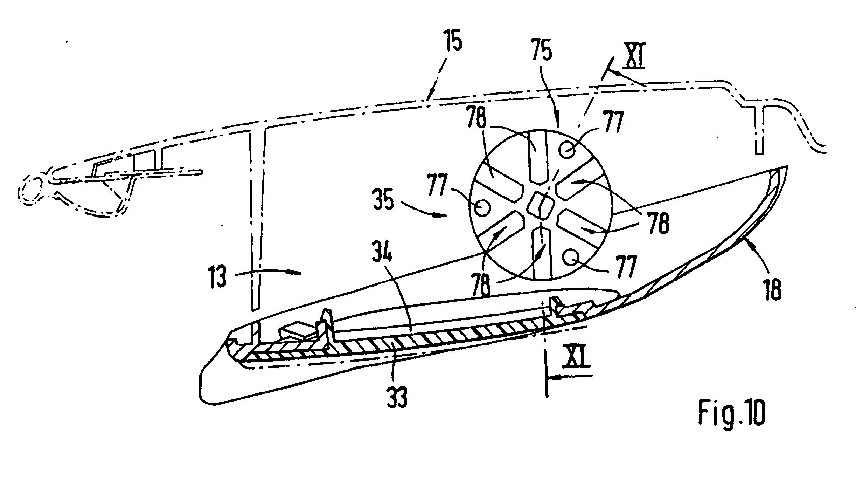

Das Gehäuse 18 ist an seinen beiden Längsseiten mittels Befestigungsschrauben 31 am darüberliegenden formsteifen Verdeckrahmen 15 in Lage gehalten. Hierzu sind an der Unterseite des Gehäuses 18 auf jeder Längsseite jeweils zwei beabstandet angeordnete versenkte Aufnahmen 32 vorgesehen (Fig. 8). Die von unten her eingedrehten Befestigungsschrauben 31 sind durch in das Gehäuse 18 einclipsbare Kunststoffabdeckungen 33 vom Fahrgastraum aus verkleidet. Weiter innenliegend neben den Befestigungsschrauben 31 sind am Gehäuse 18 ferner langgestreckte Schlitzöffnungen 34 vorgesehen, durch die bei abgenommener Kunststoffabdeckung 33 ein Hilfswerkzeug für die manuelle Notbetätigung 35 des motorischen Verschlusses 13 einführbar ist (Fig. 10).

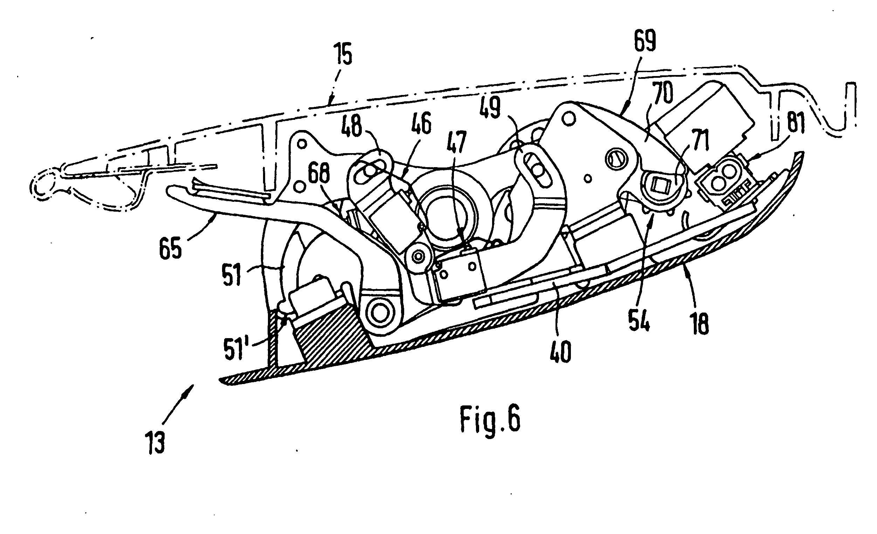

An der dem formsteifen Verdeckrahmen 15 zugekehrten Seite des Gehäuses 18 sind zwei beabstandete, längsgerichtete Lagerböcke 36, 37 angeordnet, die durch örtlich vorgesehene querverlaufende Distanzelemente 38 in definiertem Abstand zueinander gehalten sind. Beide Lagerböcke 36, 37 sind am darunterliegenden Gehäuse 18 durch schraubbare Befestigungselemente 39 in Lage gehalten. Der aufrechte Lagerbock 36 weist am unteren Rand eine etwa horizontale, plattenförmige Abstellung 40 auf, an der der Getriebemotor 22 festsetzbar ist. Der Getriebemotor 22 setzt sich im Ausführungsbeispiel aus einem Elektromotor 41 und einem angeflanschten Schneckengetriebe 42 zusammen, wobei das einen Winkelabgang aufweisende Schneckengetriebe 42 mit dem etwa senkrecht zum Elektromotor 41 verlaufenden Übertragungselement 23 in Wirkverbindung steht. An beiden aufrechten Lagerböcken 36, 37 ist jeweils ein Ende des Antriebshebels 25, 25' drehbar gelagert (fluchtende, ortsfeste Drechachsen 43, 43'). Die anderen Enden der beiden beabstandeten Antriebshebel 25, 25' sind mit dem hinteren Rand des Verschlußhakens 20 drehbar verbunden (Drehachse 44). Beide Antriebshebel 25, 25' tragen einen querverlaufenden Schaltbolzen 45, wobei ein freies vorstehendes Ende des Schaltbolzens 45 je nach Endstellung des Verschlußhakens 20 mit einem zugeordneten Endlagenschalter 46, 47 zusammenwirkt. Beide Endlagenschalter 46, 47 sind an der dem Getriebemotor 22 zugekehrten Seiten des angrenzenden Lagerbockes 36 angeordnet. Die Endlagenschalter 46, 47 sind an Trägerblechen 48, 49 angeordnet, wobei die Trägerbleche 48, 49 am Lagerbock 36 angeschraubt sind. In den Trägerblechen 48, 49 vorgesehene, längliche Schlitzöffnungen zum Hindurchführen der Schrauben gewährleisten eine Einstellbarkeit der Endlagenschalter 46, 47 bei der Montage (Fig. 6). Der Endlagenschalter 46 ist dem Überwachungskontakt 27 zugeordnet und wird betätigt, wenn sich der Verschlußhaken 20 in seiner Entriegelungsstellung E befindet. Der andere Endlagenschalter 47 bildet den Überwachungskontakt 28 und wird durch den Schaltbolzen 45 dann betätigt, wenn der Verschlußhaken 20 seine Verriegelungsstellung D einnimmt.

Der Verschlußhaken 20 weist beabstandet zu seiner gelenkigen Verbindung mit den Antriebshebeln 25, 25' zumindest einen seitlich vorstehenden Führungszapfen 50 auf, der mit einer am angrenzenden Lagerbock 36 bzw. 37 ausgebildeten Kulissenbahn 51 in Wirkverbindung steht. Am unteren, vorderen Rand der Kulissenbahn 51 ist eine endseitige Raste 51' angebracht, in die der Führungszapfen 50 in Entriegelungsstellung E des Verschlußhakens 20 eingreift.

Im Ausführungsbeispiel erstreckt sich der querverlaufende Führungszapfen 50 beiderseits des längsverlaufenden Verschlußhakens 20, wobei die vorstehenden freien Enden des Führungszapfens 50 in Kulissenbahnen 51 der zugeordneten Lagerböcke 36 und 37 eingreifen. Beide vorstehende Führungszapfen 50 sind über Federelemente 52 mit einem die beiden Lagerböcke 36, 37 verbindenden oberen Querbolzen 53 verbunden, so daß der Verschlußhaken 20 federbelastet ist. Während sich der Getriebemotor 22 auf der einen Seite der beabstandeten Lagerböcke 36, 37 befindet, ist auf der anderen Seite der Lagerböcke 36, 37 das Getriebe 24 vorgesehen. Zur Erzielung eines großen Übersetzungsverhältnisses wird das Getriebe 24 im Ausführungsbeispiel durch ein zweistufiges Stirnradgetriebe gebildet. Die erste außenliegend angeordnete Stufe des Stirnradgetriebes umfaßt ein mit dem querverlaufenden Übertragungselement 23 fest verbundenes Ritzel 54, das mit einem auf einer Zwischenwelle 55 gelagerten Zahnrad 56 kämmt. Das Zahnrad 56 hat einen größeren Außendurchmesser und eine größere Zähnezahl als das kleine Ritzel 54. Auf der Zwischenwelle 55 ist ferner ein weiteres, festsitzendes Antriebsritzel 57 angebracht, das ein auf einer Antriebswelle 58 sitzendes größeres Zahnrad 59 antreibt, wobei die Antriebswelle 58 fest mit dem Antriebshebel 25 verbunden ist.

Das Antriebsritzel 57 und das Zahnrad 59 der zweiten Stufe sind einerseits an dem dem Getriebemotor 22 abgekehrten Lagerbock 37 und andererseits an einer äußeren Lagerplatte 60 drehbar gelagert, wobei die etwa parallel zu den Lagerböcken 36, 37 verlaufende Lagerplatte 60 über querverlaufende Distanzelemente 61 an den Lagerbock 37 angeschlossen ist. Das auf das Übertragungselement 23 aufgesetzte Ritzel 54 und das mit ihm kämmende Zahnrad 56 erstrecken sich seitlich außerhalb der Lagerplatte 60. Das querverlaufende Übertragungselement 23 wird im Ausführungsbeispiel durch zwei in Querrichtung aneinandergesetzte Antriebsabschnitte 62, 63 gebildet, die über eine Steckkupplung 64 miteinander verbunden sind. Durch die Steckkupplung 64 läßt sich der das Ritzel 54 tragende Antriebsabschnitt 63 um einen definierten Winkel gegenüber dem anderen Antriebsabschnitt 62 bewegen. Der stabförmige, etwa rechtwinkelig profilierte Antriebsabschnitt 62 ist mit seinem einen Ende in eine korrespondierende Öffnung des Schneckengetriebes 42 eingesteckt, wogegen das andere Ende des Antriebsabschnitts 62 in eine endseitige, gabelförmige Ausnehmung des anderen, wellenförmigen Antriebsabschnitts 63 eingreift.

An den Außenseiten der beiden beabstandeten Lagerböcke 36, 37 ist oberhalb des Verschlußhakens 20 ein Taster 65 schwenkbar gelagert, der durch eine Zugfeder 66 nach unten gezogen wird. Beim Bewegen des vorderen Verdeckabschnitts 15 in die Schließstellung gelangt der Taster 65 in Kontakt mit der darunterliegenden Kulisse 19 und wird entgegen der Federkraft nach oben gedrückt. Hierdurch betätigt ein seitlich abgestellter Schenkel 67 des Tasters 65 einen auf die Außenseite der Lagerplatte 60 aufgeschraubten Positionsschalter 68 (Fig. 9). Der Positionsschalter 68 ist dem Überwachungskontakt 29 zugeordnet. Der Taster 65 ist auch für andere Konstruktionen von Verdeckverschlüssen vorteilhaft verwendbar. Der Taster 65 signalisiert, daß das Verdeck 3 vorne ist und der Schließvorgang starten kann.

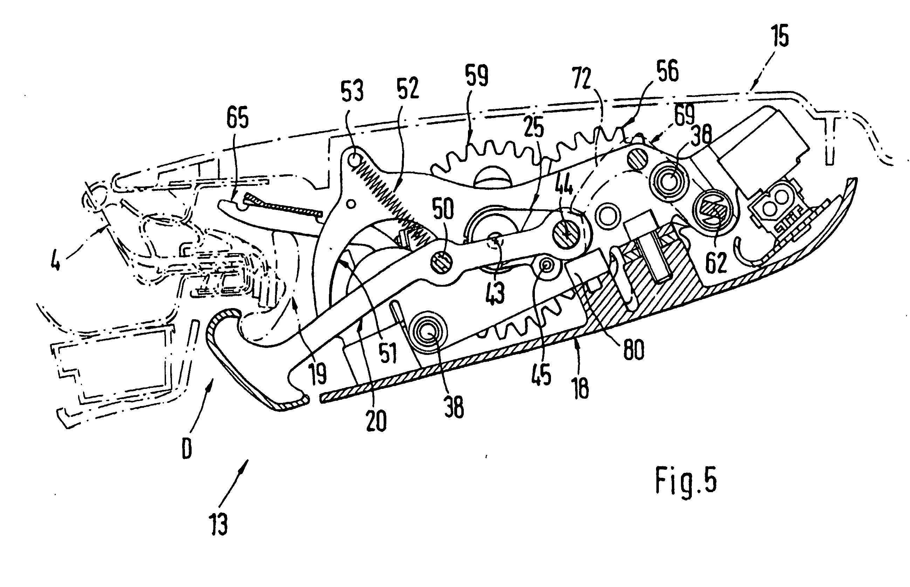

An dem die beiden Endlagenschalter 46, 47 tragenden Lagerbock 36 ist eine federbelastete Sperrklinke 69 drehbar gelagert, wobei der nach hinten gerichtete Arm 70 der Sperrklinke 69 endseitig mit einer Kurvenscheibe 71 des Übertragungselementes 23 in Wirkverbindung steht (Fig. 6). Das freie Ende des nach vorne ragenden Armes 72 legt sich in Verriegelungsstellung D des Verschlußhakens 20 von oben gegen den Antriebshebel 25' und blockiert diesen, wodurch eine zusätzliche Sicherung des Verschlußhakens 20 bei Erschütterungen, Verwindungen oder dergleichen gegeben ist (Fig. 5).

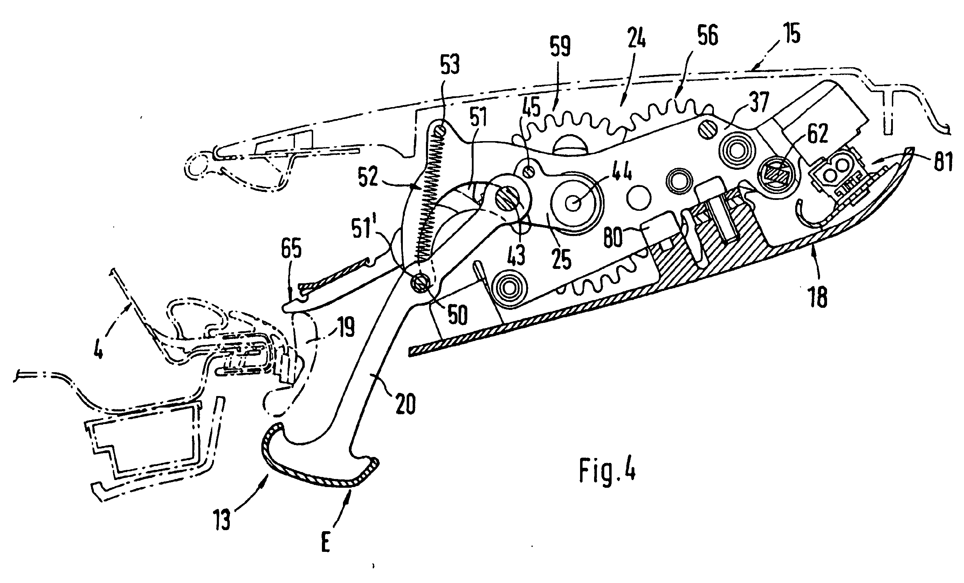

Gemäß Fig. 4 ist am Gehäuse ein Stecker 81 montiert der mit nicht näher dargestellten elektrischen Versorgungsleitungen verbindbar ist. Die manuelle Notbetätigung 35 des Verschlusses 13 wird dadurch erzielt, daß das Zahnrad 56 der ersten Getriebestufe auf einem axial verschiebbaren Tragteil 73 sitzt, das mittels einer Druckfeder 74 nach außen gegen eine endseitige, fest mit der Zwischenwelle 55 verbundene Scheibe 75 gedrückt wird. Durch die Kraft der Druckfeder 74 greifen vorstehende Zapfen 76 der Scheibe 75 in korrespondierende Ausnehmungen 77 des Tragteils 73 ein.

Beim Einsetzen eines nicht näher dargestellten Hilfswerkzeuges in radiale, seitlich offene Aussparungen 78 der Scheibe 75 wird das Tragteil 73 mit dem Zahnrad 56 entgegen der Kraft der Druckfeder 74 axial nach innen bewegt und es erfolgt eine mechanische Entkoppelung von Tragteil 73 und Scheibe 75. Durch manuelle Drehbewegung der Scheibe 75 mit dem Hilfswerkzeug wird die Zwischenwelle 55 und somit das auf ihr sitzende Antriebsritzel 57 angetrieben. Das Antriebsritzel 57 treibt das auf der Antriebswelle 58 sitzende Zahnrad 59 an, so daß durch die Drehbewegung des Zahnrades 59 auch der Antriebshebel 25 verschwenkt wird. Dieser wiederum bewegt den Verschlußhaken 20 des Verschlusses 13 in die gewünschte Stellung. Beim axialen Verschieben des Tragteils 73 wird ein an der Innenseite des Zahnrades 56 anliegender, federbelasteter Entriegelungsbolzen 79 in Querrichtung und zwar in Richtung Getriebemotor 22 bewegt, wodurch die Sperrklinke 69 außer Eingriff mit der Kurvenscheibe 71 gelangt. Die Notbetätigung 35 ist nur bei entriegelter Sperrklinke 69 möglich.

Bei verriegeltem Verdeck 3 (Fig. 5) nimmt der Verschlußhaken 20 die Verriegelungsstellung D ein, in der dieser eine Übertotpunktlage aufweist. Das vordere Ende des Verschlußhakens 20 hintergreift die Kulisse 19. Der Führungszapfen 50 befindet sich am hinteren Ende der Kulissenbahnen 51 und das hintere Ende des Verschlußhakens 20 liegt an einem darunterliegenden Anschlag 80 des Gehäuses 18 auf. Die hintere Endstellung der Antriebshebel (25, 25') ist der Fig. 5 zu entnehmen. Der Schaltbolzen 45 betätigt den Endlagenschalter 47. Die Sperrklinke 69 drückt von oben gegen den Antriebshebel 25' und blockiert somit den Verschlußhaken 20.

Zum Öffnen des Verschlusses 13 wird der Betätigungsschalter 30 im Fahrgastraum gedrückt und über das Steuergerät 26 wird der Getriebemotor 22 in Gang gesetzt, wobei das Übertragungselement 23 eine Drehbewegung entgegen dem Uhrzeigersinn beschreibt. Diese wird über das Getriebe 24 auf den Antriebshebel 25 übertragen, so daß dieser ebenfalls entgegen dem Uhrzeigersinn nach vorne verschwenkt wird. Der Führungszapfen des Verschlußhakens 20 wandert entlang der Kulissenbahnen 51 in die endseitige Raste 51'. Kurz vor Erreichen dieser Endstellung betätigt der Schaltbolzen 45 den Endlagenschalter 46. Die Entriegelungsstellung E des Verschlußhakens 20 ist in Fig. 4 dargestellt. Beim Verriegeln versetzt der Getriebemotor 22 das Übertragungselement 23 in eine Drehbewegung im Uhrzeigersinn.

Die Betätigung der Verriegelungsvorrichtung 11 ist nachfolgend anhand des in Fig. 12 dargestellten Schaltplanes für die Betätigung der motorischen Betätigungseinrichtung 21 näher beschrieben. Das zentrale Steuergerät 26 erhält die Signale der Überwachungskontakte 27 bis 29 sowie des Betätigungsschalters 30 und steuert die motorische Betätigungseinrichtung 21 im Sinne eines Entriegelns oder Verriegelns der Verriegelungsvorrichtung 11 an. Der Öffnungs- oder Schließvorgang des Verdeckes 3 wird durch den Betätigungsschalter 30 vorgenommen, der üblicherweise als Betätigungstaster im Fahrzeuginnenraum ausgebildet ist. Selbstverständlich sind auch andere Betätigungseinrichtungen neben dem Betätigungsschalter 30 möglich, so beispielsweise eine Funk-Fernbedienung oder ein Öffnungs- bzw. Schließsignal für das Verdeck 2, das aus einer nicht gezeigten Komfort-Schließanlage des Personenkraftwagens 1 gewonnen wird.

Der erste Überwachungskontakt 27 gibt ein Signal ab, wenn der Verschlußhaken 20 seine Verriegelungsstellung D einnimmt. Der zweite Überwachungskontakt 28 gibt ein Signal ab, wenn der Verschlußhaken 20 seine Entriegelungsstellung E einnimmt. Der dritte Überwachungskontakt 29 gibt ein Signal ab, wenn der vordere Verdeckabschnitt 15 und damit auch der Taster 65 von der Kulisse 19 abgehoben ist

Das Steuergerät 26 steuert einen Öffnungsvorgang wie folgt: Wenn der Betätigungsschalter 30 in Richtung "Öffnen" gedrückt ist, wird die motorische Betätigungseinrichtung 21 im Sinne eines Entriegelns des Verschlußhakens 20 angesteuert. Sowie der erste Überwachungskontakt 27 kein Signal mehr abgibt und damit signalisiert, daß der Verschluß nicht mehr verriegelt ist, kann eine Öffnungsbewegung des Verdeckkastendeckels 7 eingeleitet werden. Das Steuergerät 26 steuert weiterhin die motorische Betätigungseinrichtung 21 im Sinne eines Entriegelns des Verschlußhakens 20 an, bis ein Signal des zweiten Überwachungskontaktes 28 anzeigt, daß der Verschluß entriegelt ist. Auf dieses Signal hin kann das Verdeck 3 in an sich bekannter Weise geöffnet werden; während der Öffnungsbewegung steuert das Steuergerät 26 die motorische Betätigungseinrichtung 21 wie dem Sinne eines Verriegelns des Verschlußhakens 20 an, so daß dieser beim Ablegen des Verdeckes 2 in seiner geöffneten Stellung seine Verriegelungsstellung D einnimmt. Das Erreichen der Verriegelungsstellung D und damit die Beendigung der Ansteuerung der motorischen Betätigungseinrichtung 21 wird wiederum durch den ersten Überwachungskontakt 27 angezeigt.

Zum Schließen des Verdeckes 3 wird der Betätigungsschalter 30 in Richtung "Schließen" gedrückt. Das Verdeck 3 wird nun in an sich bekannter Weise aus seiner Offenstellung herausbewegt. Während der Schließbewegung des Verdeckes 3 steuert das Steuergerät die motorische Betätigungseinrichtung 21 im Sinne eines Entriegelns des Verschlußhakens 20 so lange an, bis der zweite Überwachungskontakt 28 das Erreichen der Entriegelungsstellung E des Verschlußhakens 20 anzeigt. Während des Schließvorganges des Verdeckes 3 zeigt ein Signal des dritten Überwachungskontaktes 29 an, daß das Verdeck angehoben ist Sobald dieses Signal nicht mehr vorhanden ist, steuert das Steuergerät 26 die motorische Betätigungseinrichtung 21 im Sinne eines Verriegelns des Verschlußhakens 20 so lange an, bis ein Signal des ersten Überwachungskontaktes 27 zeigt, daß der Verschlußhaken 20 seine Verriegelungsstellung D erreicht hat Der Schließvorgang des Verdeckes 3 einschließlich des Verriegelungsvorganges der Verriegelungsvorrichtung 11 ist mit diesem Schritt abgeschlossen.

## Patentansprüche

1. Verschluß (13) für ein Verdeck (3) eines Fahrzeuges, insbesondere Personenwagens, welches gegen einen feststehenden Rahmen (4) eines Aufbaus gespannt wird, wobei der Verschluß (13) ein verdeckseitig angeordnetes Gehäuse (18) mit einem bewegbaren, in Fahrzeuglängsrichtung verlaufenden Verschlußhaken (20) umfaßt, der mit einer am Rahmen (4) angeordneten Kulisse (19) zusammenwirkt und mittels einer motorischen Betätigungseinrichtung (21) von einer Schließstellung in eine Offenstellung verlagerbar ist, **dadurch gekennzeichnet, daß** die motorische Betätigungseinrichtung (21) für den Verschlußhaken (20) einen etwa parallel zur Längserstreckung des Verschlußhakens (20) ausgerichteten Getriebemotor (22) umfaßt, der über ein querverlaufendes Übertragungselement (23) und ein nachgeschaltetes Getriebe (24) mit einem den Verschlußhaken (20) bewegenden Antriebshebel (25) in Wirkverbindung steht.

2. Verschluß nach Anspruch 1, **dadurch gekennzeichnet, daß** das Gehäuse (18) mittels Befestigungsschrauben (31) von unten gegen einen formsteifen vorderen Verdeckrahmen (15) geschraubt ist, wobei die Befestigungsschrauben (31) durch in das Gehäuse (18) einclipsbare Kunststoffabdeckungen (33) vom Fahrgastraum aus verkleidet sind.

3. Verschluß nach den Ansprüchen 1 und 2, **dadurch gekennzeichnet, daß** am Gehäuse (18) neben den Aufnahmen (32) für die Befestigungsschrauben (31) langgestreckte Schlitzöffnungen (34) ausgebildet sind, durch die bei ausgeclipster Kunststoffabdeckung (33) ein Hilfswerkzeug für die manuelle Notbetätigung (35) des motorischen Verschlusses (13) einführbar ist.

4. Verschluß nach Anspruch 1, **dadurch gekennzeichnet, daß** an der Oberseite des Gehäuses (18) zwei beabstandet angeordnete Lagerböcke (36, 37) vorgesehen sind, die durch örtlich angeordnete Distanzelemente (38) zueinander in Lage gehalten sind, wobei an beiden Lagerböcken (36, 37) jeweils ein mit einer querverlaufenden Antriebswelle 58 verbundenes Ende des zugeordneten Antriebshebels (25, 25') drehbar gelagert ist, während das andere Ende des Antriebshebels (25, 25') gelenkig mit dem dazwischenliegend angeordneten Verschlußhaken (20) verbunden ist.

5. Verschluß nach einem oder mehreren der vorangegangenen Ansprüche, **dadurch gekennzeichnet, daß** an beiden Antriebshebein (25, 25') ein querverlaufender Schaltbolzen (45) gelagert ist, wobei ein freies vorstehendes Ende des Schaltbolzens (45) je nach Endstellung des Verschlußhakens (20) mit einem zugeordneten Endlagenschalter (46 bzw. 47) zusammenwirkt.

6. Verschluß nach einem oder mehreren der vorangegangenen Ansprüche, **dadurch gekennzeichnet, daß** der Getriebemotor (22) auf der einen Seite und das Getriebe (24) auf der anderen Seite der beabstandeten Lagerböcke (36, 37) angeordnet ist.

7. Verschluß nach Anspruch 1, **dadurch gekennzeichnet, daß** das querverlaufende Übertragungselement (23) durch zwei über eine Steckkupplung (64) miteinander verbundene Antriebsabschnitte (62, 63) gebildet wird.

8. Verschluß nach Anspruch 1, **dadurch gekennzeichnet, daß** das Getriebe (24) als zweistufiges Stirnradgetriebe ausgebildet ist.

9. Verschluß nach Anspruch 8, **dadurch gekennzeichnet, daß** die erste Stufe des Stirnradgetriebes durch ein auf dem Übertragungselement (23) festsitzendes Ritzel (54) gebildet wird, das mit einem auf einer Zwischenwelle (55) gelagerten Zahnrad (56) kämmt.

10. Verschluß nach den Ansprüchen 8 und 9, daß die zweite Stufe des Stirnradgetriebes durch ein auf der Zwischenwelle (55) angeordnetes weiteres Antriebsritzel (57) gebildet wird, das ein auf der Antriebswelle (58) sitzendes Zahnrad (59) antreibt, wobei die Antriebswelle (58) fest mit dem Antriebshebel (25) verbunden ist.

11. Verschluß nach einem oder mehreren der vorangegangenen Ansprüche, **dadurch gekennzeichnet, daß** der Verschlußhaken (20) beabstandet zu seiner gelenkigen Verbindung mit den Antriebshebeln (25, 25') zumindest einen seitlich vorstehenden Führungszapfen (50) aufweist, der mit seinem freien Ende mit einer am angrenzenden Lagerbock (36 bzw. 37) ausgebildeten Kulissenbahn (51) in Wirkverbindung steht.

12. Verschluß nach Anspruch 11, **dadurch gekennzeichnet, daß** der Führungszapfen (50) über wenigstens ein Federelement (52) mit einem die beiden Lagerböcke (36, 37) verbindenden oberen Querbolzen (53) verbunden ist.

13. Verschluß nach einem oder mehreren der vorangegangenen Ansprüche, **dadurch gekennzeichnet, daß** an den beiden Lagerböcken ((36, 37) ein federbelasteter Taster (65) schwenkbar gelagert ist, der beim Schließen des Verdecks (3) auf die rahmenseitig befestigte Kulisse (19) auftrifft und durch diese nach oben hin verschwenkt wird, wodurch ein abgestellter Schenkel (67) des Tasters (65) einen Positionsschalter (68) betätigt.

14. Verschluß nach einem oder mehreren der vorangegangenen Ansprüche, **dadurch gekennzeichnet, daß** das Zahnrad (56) der ersten Getriebestufe auf einem Tragteil (73) sitzt, das mittels einer Druckfeder (74) gegen eine endseitige, fest mit der Zwischenwelle (55) verbundene Scheibe (75) gedrückt wird, wobei vorstehende Zapfen (76) der Scheibe (75) in korrespondierende Ausnehmungen (77) des Tragteils (73) eingreifen und daß beim Einsetzen eines Hilfswerkzeuges in radiale Aussparungen (78) der Scheibe (75) das Tragteil (73) mit dem Zahnrad (56) axial von der Scheibe (75) wegbewegt wird und daß durch manuelle Drehbewegung der Scheibe (75) durch das Hilfswerkzeug der Verschlußhaken (20) in die gewünschte Stellung bewegt wird.

15. Verschluß nach Anspruch 14, **dadurch gekennzeichnet, daß** bei axial bewegtem Tragteil (73) und Zahnrad (56) ein querverlaufender Entriegelungsbolzen (79) in Querrichtung bewegt wird, so daß eine federbelastete Sperrklinke (69) außer Eingriff mit einer Kurvenscheibe (71) des Übertragungselementes (23) gelangt.

## Claims

1. A locking device (13) for a folding top (3) of a vehicle, in particular a passenger car, which folding top is tensioned against a fixed frame (4) of a body, wherein the locking device (13) comprises a housing (18) arranged on the folding top and with a movable locking hook (20) which extends in the longitudinal direction of the vehicle and which co-operates with a slotted guide (19) arranged on the frame (4) and is displaceable from a closed position into an open position by means of a motor-driven actuating device (21), **characterized in that** the motor-driven actuating device (21) for the locking hook (20) comprises a gear motor (22) which is orientated substantially parallel to the longitudinal extension of the locking hook (20) and which is operatively connected by way of a transversely extending transmission element (23) and a gearing (24) arranged downstream to a driving lever (25) which moves the locking hook (20).

2. A locking device according to Claim 1, **characterized in that** the housing (18) is screwed from below against a dimensionally stable front folding-top frame (15) by means of fastening screws (31), wherein the fastening screws (31) are concealed from the passenger compartment by coverings (33) of plastics material capable of being clipped into the housing (18).

3. A locking device according to Claims 1 and 2, **characterized in that** elongate slot openings (34), through which an auxiliary tool for the manual emergency actuation (35) of the motor-driven locking device (13) is capable of being inserted when the covering (33) of plastics material is removed, are formed on the housing (18) adjacent to the receiving means (32) for the fastening screws (31).

4. A locking device according to Claim 1, **characterized in that** two bearing stands (36, 37), which are arranged spaced from each other and which are held in position with respect to each other by spacer elements (38) arranged locally, are provided on the upper side of the housing (18), wherein one end - connected to a transversely extending drive shaft 58 - of the associated driving lever (25, 25') is mounted in a rotatable manner on the two bearing stands (36, 37) in each case, whereas the other end of the driving lever (25, 25') is connected in an articulated manner to the locking hook (20) arranged so as to lie between them.

5. A locking device according to one or more of the preceding Claims, **characterized in that** a transversely extending indexing bolt (45) is mounted on the two driving levers (25, 25'), wherein a freely projecting end of the indexing bolt (45) co-operates with an associated end-position switch (46 and 47 respectively) depending upon the end position of the locking hook (20).

6. A locking device according to one or more of the preceding Claims, **characterized in that** the gear motor (22) is arranged on one side and the gearing (24) is arranged on the other side of the spaced bearing stands (36, 37).

7. A locking device according to Claim 1, **characterized in that** the transversely extending transmission element (23) is formed by two driving portions (62, 63) connected to each other by way of a plug-and-socket connector (64).

8. A locking device according to Claim 1, **characterized in that** the gearing (24) is constructed in the form of a two-stage spur gear.

9. A locking device according to Claim 8, **characterized in that** the first stage of the spur gear is formed by a pinion (54) which is mounted in a fixed manner on the transmission element (23) and which meshes with a toothed wheel (56) mounted on an intermediate shaft (55).

10. A locking device according to Claims 8 and 9, **[characterized in] that** the second stage of the spur gear is formed by a further driving pinion (57) which is arranged on the intermediate shaft (55) and which drives a toothed wheel (59) mounted on the drive shaft (58), wherein the drive shaft (58) is connected to the driving lever (25) in a fixed manner.

11. A locking device according to one or more of the preceding Claims, **characterized in that**, at a distance from its articulated connexion to the driving levers (25, 25'), the locking hook (20) has at least one guiding pin (50) which projects laterally and which is operatively connected by its free end to a slotted-guide path (51) formed on the adjacent bearing stand (36 and 37 respectively).

12. A locking device according to Claim 11, **characterized in that** the guiding pin (50) is connected by way of at least one spring element (52) to an upper transverse pin (53) which connects the two bearing stands (36, 37).

13. A locking device according to one or more of the preceding Claims, **characterized in that** a spring-loaded feeler (65) is mounted in a pivotable manner on the two bearing stands (36, 37), and, when the folding top (3) is closed, it strikes against the slotted guide (19) fastened to the frame (4) and is pivoted upwards by the said slotted guide (19), as a result of which a projecting arm (67) of the feeler (65) actuates a position switch (68).

14. A locking device according to one or more of the preceding Claims, **characterized in that** the toothed wheel (56) of the first gearing stage is mounted on a support part (73) which is pressed by means of a compression spring (74) against a disc (75), at the end, connected to the intermediate shaft (55) in a fixed manner, wherein projecting pins (76) of the disc (75) engage in corresponding apertures (77) in the support part (73), and when an auxiliary tool is inserted into radial recesses (78) in the disc (75) the support part (73) is moved with the toothed wheel (56) axially away from the disc (75), and the locking hook (20) is moved into the desired position by a manual rotational movement of the disc (75) by the auxiliary tool.

15. A locking device according to Claim 14, **characterized in that** when the support part (73) and the toothed wheel (56) are moved axially a transversely extending unlocking pin (79) is moved in the transverse direction, so that a spring-loaded pawl (69) disengages from a cam disc (71) of the transmission element (23).

## Revendications

1. Fermeture (13) pour capote (3) d'un véhicule, en particulier pour une voiture particulière, tendue sur un châssis fixe (4) d'une structure, dans laquelle la fermeture (13) comprend un boîtier (18) disposé du côté de la capote avec un crochet de fermeture (20) mobile se déplaçant selon la direction longitudinale du véhicule, connecté à un coulisseau (19) disposé sur le châssis (4) et déplaçable au moyen d'un dispositif d'actionnement motorisé (21) entre une position fermée et une position ouverte, **caractérisée en ce que** le dispositif d'actionnement motorisé (21) du crochet de fermeture (20) comprend un moteur d'entraînement (22) disposé environ parallèlement à l'extension longitudinale du crochet de fermeture (20) et connecté par un élément de transmission (23) transversal et un entraînement (24) couplé ensuite à un levier de commande (25) actionnant le crochet de fermeture (20).

2. Fermeture selon la revendication 1, **caractérisée en ce que** le boîtier (18) est vissé par le dessous au moyen de vis de fixation (31) contre un châssis de capote rigide (15) avant, dans laquelle les vis de fixation (31) sont recouvertes du côté de l'habitacle par des protections (33) en matériau synthétique clipsables sur le boîtier (18).

3. Fermeture selon les revendications 1 et 2, **caractérisée en ce que**, en plus des fixations (32) pour les vis de fixation (31), des fentes (34) allongées sont pourvues dans le boîtier (18) à travers lesquelles, après avoir déclipsé les protections (33) en matière synthétique, un outil peut être introduit pour l'actionnement manuel de secours (35) de la fermeture motorisée (13).

4. Fermeture selon la revendication 1, **caractérisée en ce que** deux pièces de support espacées (36,37) sont pourvues à la partie supérieure du boîtier (18) et maintenues en place l'une par rapport à l'autre par des entretoises (38) disposées localement, dans laquelle une extrémité du levier de commande (25,25') connectée à un axe de commande transversal (58) est montée de façon pivotante à chacune des deux pièces de support (36, 37), alors que l'autre extrémité du levier de commande (25, 25') est articulée sur le crochet de fermeture (20) disposé entre eux.

5. Fermeture selon l'une ou plusieurs des revendications précédentes, **caractérisée en ce qu'**une broche de commutation transversale (45) est supportée par les deux leviers de commande (25, 25'), dans laquelle une extrémité libre protubérante de la broche de commutation (45) interagit en fonction de la position finale du crochet de fermeture (20) avec un contacteur de fin de course (46, respectivement 47) associé.

6. Fermeture selon l'une ou plusieurs des revendications précédentes, **caractérisée en ce que** le moteur d'entraînement (22) est disposé d'un côté des pièces de support espacées (36, 37) et l'entraînement (24) de l'autre côté.

7. Fermeture selon la revendication 1, **caractérisée en ce que** l'élément de transmission transversal (23) est constitué par deux sections de commande (62, 63) connectées entre-elles par un accouplement emboîté (64)

8. Fermeture selon la revendication 1, **caractérisée en ce que** l'entraînement (24) est réalisée sous forme d'un entraînement à pignon droit de deux étages.

9. Fermeture selon la revendication 8, **caractérisée en ce que** le premier étage de l'entraînement à pignon droit est constitué par un pignon (54) fixé à l'élément de transmission (23) et engagé dans un engrenage (56) supporté par un axe intermédiaire (55).

10. Fermeture selon les revendications 8 et 9, **caractérisée en ce que** le second étage de l'entraînement à pignon droit est constitué par un pignon de commande (57) additionnel disposé sur l'axe intermédiaire (55) et entraînant un engrenage (59) disposé sur l'axe de commande (58), dans laquelle l'axe de commande (58) est connecté fixement au levier de commande (25).

11. Fermeture selon l'une ou plusieurs des revendications précédentes, **caractérisée en ce que** le crochet de fermeture (20) présente au moins un tenon de guidage (50) faisant saillie latéralement, espacé par rapport à son joint articulé avec les leviers de commande (25, 25') et connecté par son extrémité libre à un chemin de coulisseau (51) disposé sur une pièce de support adjacente (36, respectivement 37).

12. Fermeture selon la revendication 11, **caractérisée en ce que** le tenon de guidage (50) est connecté par au moins un ressort (52) à un boulon transversal supérieur (53) reliant les deux pièces de support (36, 37).

13. Fermeture selon l'une ou plusieurs des revendications précédentes, **caractérisée en ce qu'**un détecteur (65) contraint par un ressort est monté de façon pivotante sur chacun des deux pièces de support (36, 37), bute lors de la fermeture de la capote (3) contre le coulisseau (19) fixé du côté châssis et pivote ainsi vers le haut, un bras (67) porté par le détecteur (65) actionnant un contacteur de position (68).

14. Fermeture selon l'une ou plusieurs des revendications précédentes, **caractérisée en ce que** l'engrenage (56) du premier étage d'entraînement est monté sur un support (73) et est contraint par un ressort de pression (74) contre un disque terminal (75) monté fixement sur l'arbre intermédiaire (55), dans laquelle des tenons saillants (76) du disque (75) s'engagent dans des évidements (77) correspondants du support (73), **en ce que** lors de l'insertion d'un outil dans des encoches radiales (78) du disque (75), le support (73) portant l'engrenage (56) est éloigné axialement du disque (75) et **en ce que** la rotation manuelle du disque (75) au moyen de l'outil déplace le crochet de fermeture (20) dans la position désirée.

15. Fermeture selon la revendication 14, **caractérisée en ce que**, lorsque le support (73) et l'engrenage (56) sont déplacés axialement, un boulon de déverrouillage transversal (79) est déplacé transversalement de telle manière qu'un cliquet de verrouillage (69) contraint par un ressort se désengage d'une came (71) de l'élément de transmission (23).
